# EUROPEAN PATENT APPLICATION

(11) **EP 4 789 802 A1**
(43) Date of publication of application: **12.08.2026**
(21) Application number: 24874508.5
(22) Date of filing: 24.09.2024
(51) Int. Cl.: B23K 9/073, B23K 9/095, B23K 9/173

(54) **WELDING DEVICE**

(30) Priority: 05.10.2023 JP 2023173520; 28.02.2024 JP 2024028905
(71) Applicant: DAIHEN Corporation, Yodogawa-ku Osaka-shi Osaka 532-8512 (JP)
(72) Inventor: BABA, Hayato, Osaka-shi, Osaka 532-8512 (JP); HONDA, Reo, Osaka-shi, Osaka 532-8512 (JP); NISHISAKA, Futoshi, Osaka-shi, Osaka 532-8512 (JP); MIYAJIMA, Yuichi, Osaka-shi, Osaka 532-8512 (JP)
(74) Representative: Boult Wade Tennant LLP
(86) International application number: PCT/JP2024/033884
(87) International publication number: WO 2025/074901

(57) **Abstract**

A welding device performs consumable-electrode arc welding. The welding device includes an inverter circuit, a power supply circuit that supplies cyclically varying welding power to an arc, and a control circuit that controls the power supply circuit. The control circuit sets a target effective current or voltage for one cycle subsequent to the current time such that an effective current value and an effective voltage value of the welding power lie on a characteristic line corresponding to a set external characteristic, and controls the instantaneous welding current or voltage based on the set target effective current or voltage.

## Description

### TECHNICAL FIELD

The present disclosure relates to welding devices.

### BACKGROUND ART

Conventional welding devices include those for performing consumable-electrode arc welding. For example, Patent Document 1 discloses a conventional welding device (welding power supply device). The welding device disclosed in Patent Document 1 generates a predetermined external characteristic and performs output control in accordance with the external characteristic. In this output control, the welding device determines a target instantaneous current based on the external characteristic and sequentially controls the welding current to track the target instantaneous current.

### PRIOR-ART DOCUMENT

### Patent Document

Patent Document 1: JP-A-2009-178763

### SUMMARY OF THE INVENTION

### Problem to be solved by the Invention

In alternating current (AC) welding, AC power is supplied, and the welding current varies, for example, in a sinusoidal waveform. Consequently, controlling the current based on a target instantaneous current may lead to deviations of the welding current and voltage from the external characteristic line. In other words, it may be difficult to perform output control based on the external characteristic, which can lead to decreased arc stability. This issue is not limited to AC welding and may also occur in welding where the welding power varies cyclically, such as in direct current (DC) pulse welding.

The present disclosure has been conceived in view of the circumstances described above and aims to provide a welding device capable of preventing or reducing a decrease in arc stability when cyclically varying welding power is supplied.

### Means to solve the problem

The present disclosure provides a welding device for consumable electrode arc welding, the welding device including: a power supply circuit including an inverter circuit and configured to supply cyclically varying welding power to an arc; and a control circuit configured to control the power supply circuit. The control circuit is configured to: set a target effective current or a target effective voltage for one cycle subsequent to a current time such that an effective current value and an effective voltage value of the welding power lie on a characteristic line that corresponds to a set external characteristic; and control an instantaneous welding current or an instantaneous welding voltage based on the set target effective current or the set target effective voltage.

In a preferred embodiment of the welding device, the control circuit is configured to set the target effective current or the target effective voltage for each cycle of the welding power.

In a preferred embodiment of the welding device, the control circuit is configured to: calculate, at a calculation period that is shorter than one cycle of the welding power, a waveform of the welding current from the set target effective current or a waveform of the welding voltage from the set target effective voltage; and set the target effective current or the target effective voltage for each calculation period.

In a preferred embodiment of the welding device, the control circuit is configured to: calculate the target effective current for the one cycle subsequent to the current time, using the effective current value and the effective voltage value over one cycle preceding the current time; and determine a current waveform for the one cycle subsequent to the current time such that an effective value of the welding current over the one cycle subsequent to the current time matches the target effective current for the one cycle subsequent to the current time.

In a preferred embodiment of the welding device, the control circuit is configured to use the target effective current for the one cycle preceding the current time as a substitute for the effective current value over the one cycle preceding the current time.

In a preferred embodiment of the welding device, the control circuit is configured to use the target effective voltage for the one cycle preceding the current time as a substitute for the effective voltage value over the one cycle preceding the current time.

In a preferred embodiment of the welding device, the control circuit is configured to: use the target effective current for the one cycle preceding the current time as a substitute for the effective current value over the one cycle preceding the current time; and use an average value of instantaneous output voltage over the one cycle preceding the current time as a substitute for the effective voltage value over the one cycle preceding the current time.

In a preferred embodiment of the welding device, when Iset represents a set current, Vset represents a set voltage, R represents a slope of the characteristic line corresponding to the external characteristic and passing through the set current Iset and the set voltage Vset, Δt represents an alternating current cycle, L represents a virtual inductance, Itgt(n-1) represents the target effective current for the one cycle preceding the current time, and Vfb represents an effective value of an output voltage over the one cycle preceding the current time, the control circuit is configured to calculate the target effective current Itgt(n) for the one cycle subsequent to the current time using Equation (1):
[Math. 1] $Itgt \left(n\right) = \left(L⋅Itgt\left(n-1\right)+Δt\left(Vset+R⋅Iset-Vfb\right)\right) / \left(L+RΔt\right)$

In a preferred embodiment of the welding device, the power supply circuit is configured to supply alternating current power as the welding power to the arc.

In a preferred embodiment of the welding device, the welding device further includes an operation unit configured to allow specification of a parameter of the external characteristic. The control circuit is configured to switch between a standard value mode in which a standard value corresponding to information related to welding is set as a set value of the external characteristic and a free setting mode in which a value specified via the operation unit is set as a set value of the external characteristic.

### Advantages of the Invention

The welding device according to present disclosure sets the target effective current or voltage such that the effective current value and the effective voltage value of the welding power lie on the characteristic line corresponding to the external characteristic, and controls the instantaneous welding current or voltage. Accordingly, the welding current and voltage are regulated based on their effective values rather than instantaneous targets. This enables output control in accordance with the external characteristic, even when the welding current varies in a sinusoidal or pulsed waveform. In short, the welding device according to the present disclosure is capable of preventing or reducing a decrease in arc stability in welding where cyclically varying welding power is supplied.

### BRIEF DESCRIPTION OF THE DRAWINGS

Fig. 1 is a schematic diagram of an example configuration of a welding device according to a first embodiment.
Fig. 2 is a schematic diagram of an example configuration of a power supply device of the welding device according to the first embodiment.
Fig. 3 is a view showing an example of an external characteristic set in the power supply device (control circuit) of the welding device according to the first embodiment.
Fig. 4 is a flowchart illustrating an example of current control performed by the power supply device (control circuit) of the welding device according to the first embodiment.
Fig. 5 is a flowchart illustrating an example of current control performed by a power supply device (control circuit) of a welding device according to a second embodiment.
Fig. 6 is a diagram illustrating example waveforms of the welding current and the welding voltage over one AC cycle.
Fig. 7 is a diagram illustrating an example operation of a welding device according to a fifth embodiment.
Fig. 8 is a diagram of an example configuration of a welding device according to a variation.
Fig. 9 is a schematic diagram of an example configuration of a welding device according to a sixth embodiment.

### MODE FOR CARRYING OUT THE INVENTION

The following describes preferred embodiments of a welding device with reference to the accompanying drawings. In the following description, elements that are the same or similar are designated by like reference numerals, and redundant descriptions are omitted.

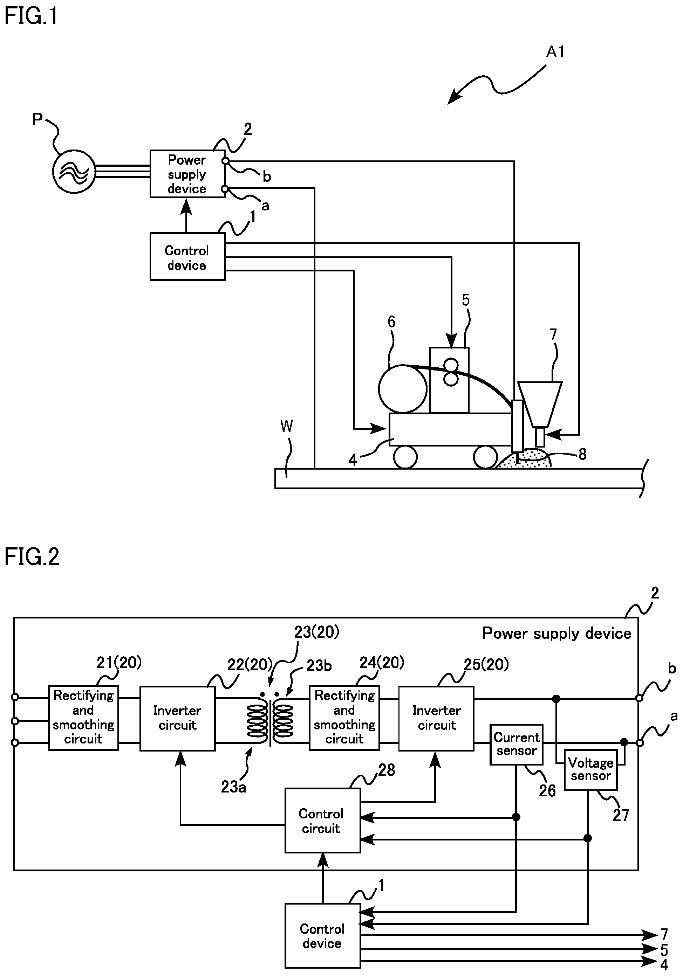

Figs. 1 and 2 are diagrams illustrating the configuration of a welding device A1 according to a first embodiment. The welding device A1 performs submerged arc welding. As shown in Fig. 1, the welding device A1 includes a control device 1, a power supply device 2, a carriage 4, a wire feeding device 5, a wire reel 6, a flux spraying device 7, and an electrode 8. The welding device A1 moves the carriage 4 along the welding line of a workpiece W, operates the flux spraying device 7 to distribute granular flux stored in the hopper, and drives the wire feeding device 5 to feed a welding wire into the flux. The welding wire is fed from the wire reel 6. The power supply device 2 converts AC power supplied from a commercial power source P into power suitable for welding and outputs the converted power to generate an arc between the electrode 8, which is the tip of the welding wire, and the workpiece W both submerged in flux. The welding is achieved by heat of the arc. Thus, the welding is formed along the welding line of the workpiece W. Note that the workpiece W may be moved or rotated instead of moving the carriage 4.

The control device 1 performs various controls of the welding device A1. The control device 1 may be a general-purpose computer installed with programs for various controls of the welding device A1 or a dedicated device for controlling the welding device A1. The control device 1 moves the carriage 4 at a predetermined travel speed. The travel speed is set according to the material, thickness, and other factors of the workpiece W. The control device 1 instructs the flux spraying device 7 to spray the flux. The control device 1 instructs the wire feeding device 5 to start or stop feeding the welding wire. The control device 1 also specifies the feed speed of the welding wire. The feed speed is determined according to the set welding current and/or other parameters. The control device 1 instructs the power supply device 2 to output power. In response to user operations, the control device 1 sets the welding current and welding voltage and outputs the set values to the power supply device 2 (a control circuit 28 described later). For example, the set values of the welding current and the welding voltage are effective values.

The power supply device 2 converts the AC power supplied from the commercial power source P into AC power of a desired frequency. The power supply device 2 supplies the converted AC power as welding power to the arc. Note that the power supply device 2 may be replaced by a plurality of power supply devices 2 that are connected in parallel (specifically, the respective output terminals a of the power supply devices 2 are connected to each other and also to the workpiece W, whereas the respective output terminals b of the power supply devices 2 are connected to each other and also to the welding wire).

As shown in Fig. 2, the power supply device 2 includes a power supply circuit 20, a current sensor 26, a voltage sensor 27, and a control circuit 28.

The power supply circuit 20 converts the AC power supplied from the commercial power source P into AC power of a desired frequency. The power supply device 2 supplies the converted AC power as welding power to the arc. The power supply circuit 20 includes a rectifying and smoothing circuit 21, an inverter circuit 22, a transformer 23, a rectifying and smoothing circuit 24, and an inverter circuit 25. Note that the power supply circuit 20 is not limited to this configuration, provided that it is capable of outputting AC power (welding power).

The rectifying and smoothing circuit 21 converts the AC power supplied from the commercial power source P into DC power and outputs the converted DC power. The rectifying and smoothing circuit 21 includes a rectifying circuit for rectifying AC current, and a smoothing capacitor for smoothing the rectified current. The rectifying and smoothing circuit 21 is not limited to a particular configuration.

The inverter circuit 22 is, for example, a single-phase full-bridge inverter employing PWM control and includes four switching elements. The inverter circuit 22 converts the DC power supplied from the rectifying and smoothing circuit 21 into high-frequency power by switching the switching elements in response to a drive signal received from the control circuit 28, and outputs the converted power. The inverter circuit 22 may be a half-bridge inverter circuit or any other type of inverter circuit, provided that it converts DC power into high-frequency power.

The transformer 23 steps up or steps down the high-frequency voltage received from the inverter circuit 22 and outputs the resulting voltage to the rectifying and smoothing circuit 24. The transformer 23 includes a primary winding 23a and a secondary winding 23b. Each input terminal of the primary winding 23a is connected to a corresponding output terminal of the inverter circuit 22. Each output terminal of the secondary winding 23b is connected to a corresponding input terminal of the rectifying and smoothing circuit 24. The output voltage of the inverter circuit 22 is stepped up or stepped down according to the winding turns ratio between the primary winding 23a and the secondary winding 23b and is input to the rectifying and smoothing circuit 24. Since the secondary winding 23b is electrically isolated from the primary winding 23a, the current from the commercial power source P is prevented from flowing into the secondary side. In addition, the transformer 23, which is configured to step up or step down the high-frequency voltage received from the inverter circuit 22, is smaller and lighter than a transformer that is configured to step up or step down the AC voltage supplied from the commercial power source P.

The rectifying and smoothing circuit 24 converts the high-frequency power received from the transformer 23 into DC power and outputs the converted DC power. The rectifying and smoothing circuit 24 includes a rectifying circuit for rectifying high-frequency current and a DC reactor for smoothing the rectified current. The rectifying and smoothing circuit 24 is not limited to a particular configuration.

The inverter circuit 25 is, for example, a single-phase full-bridge inverter employing PWM control and includes four switching elements. The inverter circuit 25 converts the DC power received from the rectifying and smoothing circuit 24 into AC power by switching the switching elements in response to a drive signal received from the control circuit 28, and outputs the converted power. The inverter circuit 25 may be a half-bridge inverter circuit or any other type of inverter circuit, provided that it converts DC power into AC power.

The current sensor 26 detects the output current (welding current) of the power supply device 2. In the present embodiment, the current sensor 26 is disposed on the line connecting one of the output terminals of the inverter circuit 25 to the output terminal a. The welding current detected by the current sensor 26 is approximately equal to the current flowing through the electrode 8. The current sensor 26 outputs a current value signal corresponding to the detected instantaneous current value to the control circuit 28. Note that the current sensor 26 is not limited to a particular configuration, provided that it detects the current flowing through the connection line. In addition, the current sensor 26 may be disposed at any suitable position. For example, the current sensor 26 may be disposed on a line connecting the other output terminal of the inverter circuit 25 to the output terminal b. The current sensor 26 may optionally be disposed outside the power supply device 2.

The voltage sensor 27 detects the output voltage (welding voltage) of the power supply device 2. In the present embodiment, the voltage sensor 27 detects the voltage across the output terminals a and b. This voltage is approximately equal to the voltage applied across the workpiece W (base material) and the tip of the electrode 8 (torch). The voltage sensor 27 outputs a voltage value signal corresponding to the detected instantaneous voltage value to the control circuit 28. Note that the voltage sensor 27 is not limited to a particular configuration, provided that it detects the voltage across the output terminals a and b. In addition, the voltage sensor 27 may be disposed at any suitable position. The voltage sensor 27 may optionally be disposed outside the power supply device 2, for example in a position that allows detection of the voltage across the workpiece W (base material) and the tip of the electrode 8 (torch).

The control circuit 28 is a circuit for controlling the power supply device 2 and is implemented, for example, by a microcomputer. The control circuit 28 receives a current value signal from the current sensor 26 and a voltage value signal from the voltage sensor 27. The control circuit 28 outputs respective drive signals to the inverter circuits 22 and 25.

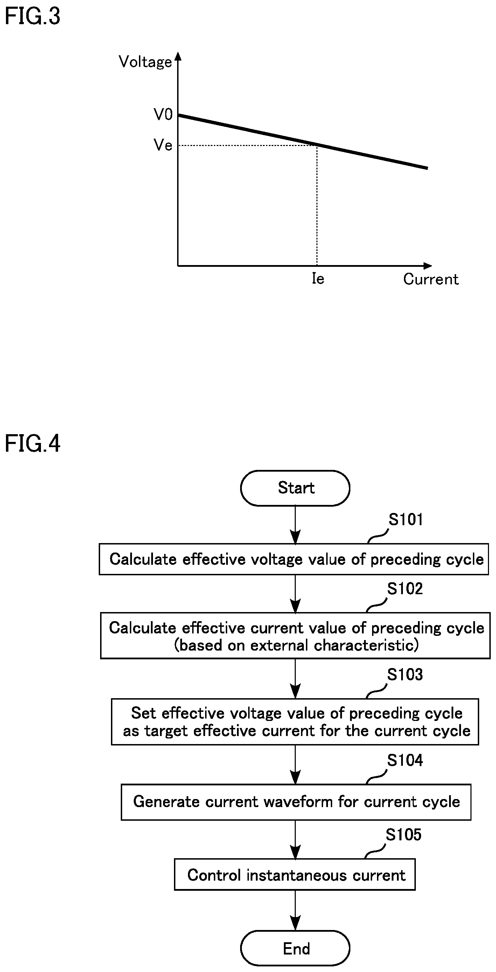

The control circuit 28 controls the welding power (AC power) supplied to the arc in a manner to cause the effective current value and the effective voltage value to lie on a characteristic line corresponding to the desired external characteristic (hereinafter, the characteristic line may also be referred to as "external characteristic line"). In the following description, this control may be referred to as "external-characteristic effective-value control". The external characteristic represents the relationship between the welding current and the welding voltage. In the present embodiment, the external characteristic is defined based on the relationship between the effective current value and the effective voltage value. In the present embodiment, the external characteristic may be a constant-voltage characteristic, but may also be another characteristic, such as a drooping characteristic or a constant-current characteristic. The external characteristic is represented by a function corresponding to that characteristic, and an equation based on that function is stored in the control circuit 28. For example, Fig. 3 is a diagram showing an example of a constant-voltage characteristic. In the figure, the horizontal axis represents the effective value of the welding current, and the vertical axis represents the effective value of the welding voltage. The external characteristic shown in Fig. 3 is a straight line having a voltage of V0 at zero current and passing through the point (Ie, Ve) (Ie represents the effective current value, and Ve represents the effective voltage value). Note that the external characteristic is not limited to a straight line and may be a curved line, and a function corresponding to the external characteristic may be a piecewise-defined expression. In the present embodiment, the control circuit 28 is described with reference to an example of controlling the welding power by current control, but the welding power may alternatively be controlled by voltage control.

The control circuit 28 sets a target effective current for an n-th AC cycle (n being a positive integer) of AC power such that the effective current and voltage values over the n-th AC cycle lie on the set external characteristic line (see Fig. 3, for example). The control circuit 28 sets a target effective current provided that the power supply device 2 controls the welding power by current control. In this case, the control circuit 28 calculates the effective value Ve (effective voltage value) of the AC voltage over the (n-1)th cycle using the voltage value signal received from the voltage sensor 27. The effective voltage value over the (n-1)th cycle is then applied to the above equation representing the external characteristic, and the effective value of the AC current (effective current value Ie) over the (n-1)th cycle is derived. The thus derived effective current value Ie over the (n-1)th cycle is set as the target effective current for the n-th cycle.

Once the target effective current is set, the control circuit 28 generates a current waveform command signal based on the set target effective current. The current waveform command signal specifies the current waveform for the n-th cycle. The current waveform may be sinusoidal or, in another example, may be a different waveform such as a rectangular (trapezoidal) waveform. For example, when a perfect sinusoidal current waveform is specified, the peak current of the sinusoidal wave is √2 times the target effective current. The control circuit 28 generates the current waveform command signal at a period shorter than one cycle of the welding power (AC welding current). In a different configuration of the present embodiment, the current waveform command signal may be generated at a period equal to one cycle of the welding power.

When the current waveform command signal is generated, the control circuit 28 generates, based on the current value signal received from the current sensor 26 and the internally generated current waveform command signal, a drive signal for controlling the switching elements of the inverter circuit 22, and outputs the drive signal to the inverter circuit 22. The control circuit 28 also generates, based on the current waveform command signal, a drive signal for controlling the switching elements of the inverter circuit 25 so as to switch the power supply polarity between the electrode positive and the electrode negative, and outputs the drive signal to the inverter circuit 25. In other words, the control circuit 28 performs feedback control so that the waveform of the welding current tracks the waveform specified by the current waveform command signal. As a result, the power supply device 2 outputs an AC current in accordance with the current waveform command signal. The drive signals for the inverter circuits 22 and 25 may be generated a shorter period than that of the current waveform command signal described above. Note that the control circuit 28 may generate the drive signals based solely on the current waveform command signal without using the current value signal.

Unlike the example described above, the welding power may alternatively be controlled by voltage control. In that case, the control circuit 28 performs the following operations. First, the control circuit 28 sets the target effective voltage. Specifically, the control circuit 28 calculates the effective value Ie of AC current (effective current value) over the (n-1)th cycle based on the current value signal received from the current sensor 26. The effective current value Ie over the (n-1)th cycle is then applied to the above equation that represents the external characteristic to derive the effective value Ve of the AC voltage (effective voltage value) over the (n-1)th cycle. The derived effective voltage value Ve over the (n-1)th cycle is set as the target effective voltage for the n-th cycle. Once the target effective voltage is set, the control circuit 28 generates a voltage waveform command signal based on the target effective voltage. The voltage waveform command signal specifies the voltage waveform for the n-th cycle. The voltage waveform may be sinusoidal or, in another example, may be a different waveform such as a rectangular (trapezoidal) waveform. When the voltage waveform command signal is generated, the control circuit 28 generates, based on the voltage value signal received from the voltage sensor 27 and the internally generated waveform command signal, drive signals for controlling the switching elements of the inverter circuits 22 and 25, and outputs the drive signals to the corresponding inverter circuits 22 and 25. In other words, the control circuit 28 performs feedback control so that the waveform of the welding voltage tracks the waveform specified by the voltage waveform command signal. As a result, the power supply device 2 outputs an AC voltage in accordance with the voltage waveform command signal.

Fig. 4 is a flowchart illustrating the current control of welding power performed by the control circuit 28 of the welding device A1. The flowchart of Fig. 4 describes an example in which the welding power is controlled by current control, but the welding power may alternatively be controlled by voltage control. In that case, Fig. 4 may be applied by interchanging the terms "voltage" and "current" throughout the flowchart.

First, the control circuit 28 calculates the effective voltage value over the preceding AC cycle based on the voltage value signal received from the voltage sensor 27 (S101). The method of calculating the effective value is not particularly limited. Note that immediately after the start of welding power output, no voltage value signal for the preceding AC cycle is available. In that case, the set voltage may be used as the effective voltage value corresponding to the preceding AC cycle.

Subsequently, the control circuit 28 applies the effective voltage value over the preceding AC cycle to the above function that represents the external characteristic, thereby deriving the effective current value over the preceding AC cycle (S102). In this way, the effective voltage value and the effective current value over the preceding AC cycle are obtained. Since the effective current value is derived using the function representing the external characteristic, the effective voltage and current values lie on the external characteristic line.

The control circuit 28 then sets the derived effective current value over the preceding AC cycle as the target effective current for the current AC cycle (S103).

Subsequently, the control circuit 28 generates a current waveform command signal such that the effective current value over the current AC cycle matches the set target effective current (S104). For example, the generated current waveform command signal specifies a sinusoidal waveform.

Subsequently, the control circuit 28 controls the instantaneous welding current so that the current value signal received from the current sensor 26 tracks the waveform specified by the current waveform command signal (S105).

During output of the welding power, the welding device A1 repeats the current control consisting of the steps S101 to S105 described above in each AC cycle. In the above control example, the preceding cycle and the current cycle may be separated based on a specific time point in the AC cycle of the welding power (for example, the moment when the polarity switches from negative to positive). Alternatively, the separation may be made based on the current time point. In this case, the preceding cycle then refers to the one AC cycle immediately before the current time, and the current cycle refers to the one AC cycle immediately after the current time.

The welding device A1 sets the target effective current in a manner that the effective values of the welding current and voltage (i.e., the effective current and the effective voltage) lie on the external characteristic line, and controls the instantaneous current using the target effective current. With this configuration, the instantaneous current is controlled based on the target effective values, allowing the AC welding power output to be regulated in accordance with the external characteristic. This applies not only to current-based control of welding power output, but also to voltage-based control. In other words, by setting a target effective voltage in place of a target effective current and controlling the instantaneous voltage accordingly, the AC welding power output can be regulated in accordance with the external characteristic. Thus, the welding device A1 is capable of preventing or reducing a decrease in arc stability in welding in which AC welding power is output (whether by current control or by voltage control). The welding device A1 is not limited to a configuration that outputs AC power and may also be configured to output welding power that varies cyclically (such as in DC pulse welding). In such cases, the welding device A1 can similarly prevent or reduce a decrease in arc stability.

Next, the following describes a welding device A2 according to a second embodiment. The welding device A2 differs from the welding device A1 in the method of calculating the target effective current for welding power control. The welding device A2 is identical in configuration to the welding device A1 (see Fig. 1).

The control circuit 28 of the welding device A2 sets the target effective current for the n-th AC cycle in the manner described below, such that the effective current and voltage values over the n-th AC cycle lie on the set external characteristic line. Here, the external characteristic line is a straight line on the I-V plane passing through the point (Iset, Vset) with a slope of R, where Iset represents the set current, and Vset represents the set voltage. Additionally, Δt represents an AC cycle, L represents a virtual inductance, Ifb represents the effective value of the welding current over the (n-1)th cycle, and Vfb represents the effective value of the welding voltage over the (n-1)th cycle. Then, the control circuit 28 calculates the target effective current Itgt(n) for the n-th AC cycle using Equation (2) below.
[Math. 2] $Itgt \left(n\right) = \left(L⋅Ifb+Δt\left(Vset+R⋅Iset-Vfb\right)\right) / \left(L+RΔt\right)$

Equation (2) is derived from Equation (3), which is disclosed in Patent Document 1 (Equation (3) in Patent Document 1), as described below. In Equation (3) below, Irc represents the welding current control set value, which is the instantaneous command current at that moment. Additionally, Lr represents the set inductance value, v represents the welding voltage, and i represents the welding current. $Irc = \int \left(\left(Er\left(i\right)-v\right)/Lr\right) dt$

In Equation (3) above, the relationship v = Er(i) represents the external characteristic. Here, let Er represent the output voltage set value (corresponding to the set voltage Vset above), and Ir represent the output current set value (corresponding to the set current Iset above). Then, the external characteristic in Patent Document 1 is represented as a straight line passing through the point (0, Er) with a slope of Rr, and the function representing the external characteristic is given by Equation (4) below. In the welding device A2, in contrast, the external characteristic is represented as a straight line passing through the point (Ir, Er) with the slope of Rr, and the function representing the external characteristic is given by Equation (5) below. $Er \left(i\right) = Er - Rr ⋅ i$ $Er \left(i\right) = Er - Rr ⋅ \left(i-Ir\right)$

Substituting Equation (5) into Equation (3) above yields: Irc = ∫((Er - Rr·(I - Ir) - v)/Lr)dt. Differentiating both sides with respect to time t yields Equation (6) below. $dIrc / dt = \left(Er-Rr⋅\left(i-Ir\right)-v\right) / Lr$

Let Itgt(n) represent the effective value of the output current over the n-th cycle, Ifb represent the feedback current (the effective value of the output current over the (n-1)th cycle), the left-hand side of Equation (6) can be approximated as dIrc/dt ≈ (Itgt(n) - Ifb)/Δt. Since the welding current is controlled to achieve i = Itgt(n), the right-hand side of Equation (6) is expressed as (Er - Rr·(Itgt(n) - Ir) - v)/Lr. Solving this for Itgt(n) yields Equation (7) below. $Itgt \left(n\right) = \left\{Lr⋅Ifb+Δt\left(Er+Rr⋅Ir-v\right)\right\} / \left(Lr+Rr⋅Δt\right)$

It is noted with respect to the symbols in Equation (7) that the output voltage set value Er corresponds to the set voltage Vset of the welding device A2, the output current set value Ir corresponds to the set current Iset of the welding device A2, the inductance set value Lr corresponds to the virtual inductance L of the welding device A2, the slope Rr of the external characteristic line corresponds to the slope R of the external characteristic line of the welding device A2, and the welding voltage v corresponds to the feedback voltage (the effective value of the welding voltage over the (n-1)th cycle) Vfb of the welding device A2. By substituting these corresponding symbols, specifically replacing Er with Vset, Ir with Iset, Lr with L, Rr with R, and v with Vfb, Equation (2) above is obtained. In this way, while the calculation in Patent Document 1 uses the instantaneous value as the target value, the calculation used in the welding device A2 has been extended to use the effective value as the target value.

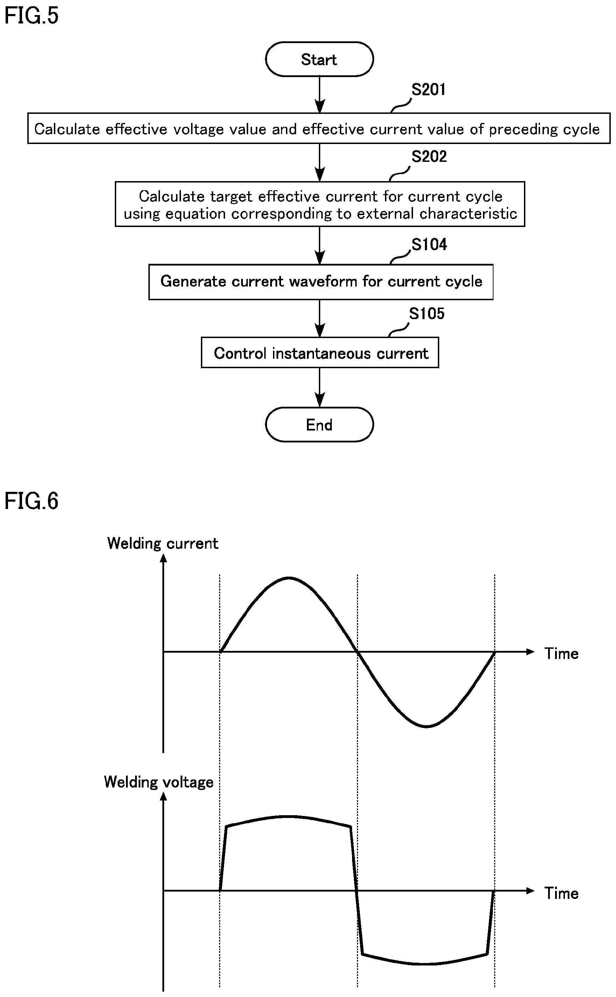

Fig. 5 is a flowchart illustrating the current control of welding power performed by the control circuit 28 of the welding device A2. The welding device A2 performs current control of welding power that includes steps S201 and S202 in place of the steps S101 to S103 used in the welding device A1.

The control circuit 28 calculates the effective voltage value over the preceding AC cycle based on the voltage value signal received from the voltage sensor 27 and also calculates the effective current value over the preceding AC cycle based on the current value signal received from the current sensor 26 (S201). The method of calculating the effective value is not particularly limited. Note that immediately after the start of welding power output, no voltage value signal or current value signal for the preceding AC cycle is available. In such a case, the set voltage and the set current may be used as the effective voltage value and effective current value corresponding to the preceding AC cycle.

Subsequently, the control circuit 28 calculates the target effective current Itgt(n) for the current AC cycle, using Equation (2) above, which corresponds to the external characteristic (S202). Here, Equation (2), which corresponds to the external characteristic, is used to calculate the target effective current Itgt(n) such that the effective values of the welding current and the welding voltage over the current AC cycle lie on the external characteristic line. This can be understood from the fact that Equation (2) above is derived from Equation (3) described in Patent Document 1 by replacing instantaneous values are replaced with effective values. The control circuit 28 sets the target effective current Itgt(n) to the thus calculated value.

Subsequently, the control circuit 28 operates similarly to the control circuit 28 of the welding device A1, by generating the current waveform command signal (step S104) and controlling the instantaneous welding current (step S105).

Similarly to the welding device A1, the welding device A2 sets the target effective current such that the effective values of the welding current and voltage (i.e., the effective current and the effective voltage) lie on the external characteristic line, and controls the instantaneous current using the target effective current. Thus, in a manner similar to the welding device A1, the welding device A2 controls the instantaneous current based on the target effective values, allowing the AC welding power output to be regulated in accordance with the external characteristic. The welding device A2 is therefore capable of preventing or reducing a decrease in arc stability in welding in which AC welding power is output.

Next, the following describes a welding device A3 according to a third embodiment. The welding device A3 differs from the welding device A2 in the equation used to calculate the target effective current Itgt(n). As for the configuration, the welding device A3 is identical to the welding device A2 (and thus to the welding device A1, see Fig. 1).

The control circuit 28 of the welding device A3 uses the target effective current Itgt(n-1) for the (n-1)th AC cycle, as a substitute for the effective value Ifb of the welding current over the (n-1)th AC cycle of in Equation (2) above. In other words, the control circuit 28 of the welding device A3 calculates the target effective current Itgt(n) for the n-th AC cycle by Equation (8) below. In submerged arc welding in particular, rapid fluctuations in the secondary-side load, such as those caused by short-circuiting, seldom occur. Therefore, the effective value Ifb of the welding current over the (n-1)th cycle is approximately equal to the target effective current Itgt(n-1). In short, the target effective current Itgt(n-1) can be used as a substitute for the effective current value Ifb. Thus, the control circuit 28 of the welding device A3 can use Equation (8) instead of the calculation used in step S202 by the control circuit 28 of the welding device A2.
[Math. 3] $Itgt \left(n\right) = \left(L⋅Itgt\left(n-1\right)+Δt\left(Vset+R⋅Iset-Vfb\right)\right) / \left(L+RΔt\right)$

Similarly to the welding device A2, the welding device A3 sets the target effective current such that the effective values of the welding current and voltage (i.e., the effective current and the effective voltage) lie on the external characteristic line and controls the instantaneous current using the target effective current. The welding device A3 is therefore capable of preventing or reducing a decrease in arc stability in welding in which AC welding power is output. In addition, in contrast to the welding device A2, the welding device A3 may omit calculation of the effective current value Ifb. Therefore, the welding device A3 can reduce the computational load compared to the welding device A2.

Next, the following describes a welding device A4 according to a fourth embodiment. The welding device A4 differs from the welding device A3 in the equation used to calculate the target effective current Itgt(n). As for the configuration, the welding device A4 is identical to the welding device A3 (and thus to the welding device A1, see Fig. 1).

The control circuit 28 of the welding device A4 uses the average value Vavg(n-1) of the welding voltage over the (n-1)th cycle, as a substitute for the effective value Vfb of the welding voltage value over the (n-1)th cycle in Equation (8) above. In other words, the control circuit 28 of the welding device A4 calculates the target effective current Itgt(n) for the n-th AC cycle by Equation (9) below. The welding current varies (is controlled to vary) in various waveforms, such as a sinusoidal wave mentioned above. However, as shown in Fig. 6, the welding voltage does not necessarily follow a waveform similar to the welding current, and instead exhibits a waveform closer to a rectangular wave. This is because a constant voltage is required to maintain the arc. In such a waveform close to a rectangular wave, the difference between the effective value and the average value is relatively small, so that the effective value Vfb of the welding voltage over the (n-1)th cycle can be approximated by the average value Vavg(n-1). Thus, the control circuit 28 of the welding device A4 can use Equation (9) instead of the calculation used in step S202 by the control circuit 28 of the welding device A2.
[Math. 4] $Itgt \left(n\right) = \left(L⋅Itgt\left(n-1\right)+Δt\left(Vset+R⋅Iset-Vavg\left(n-1\right)\right)\right) / \left(L+RΔt\right)$

Similarly to the welding devices A2 and A3, the welding device A4 sets the target effective current such that the effective values of the welding current and voltage (i.e., the effective current and the effective voltage) lie on the external characteristic line and controls the instantaneous current using the target effective current. The welding device A4 is therefore capable of preventing or reducing a decrease in arc stability in welding in which AC welding power is output. In addition, in contrast to the welding device A3, the welding device A4 may omit calculation of the effective voltage value Vfb. Therefore, the welding device A4 can reduce the computational load compared to the welding device A3. In short, the welding device A4 may omit calculation of both the effective current value and the effective voltage value Vfb, thereby significantly reducing the computational load compared to the welding device A2.

In the second to fourth embodiments, the power supply device 2 has been described with reference to an example in which the welding power is controlled by current control. However, the present disclosure is not limited thereto, and the power supply device 2 may alternatively control the welding power by voltage control. In such a case, Equations (2), (8), and (9) may be replaced with equations of the external characteristic rearranged so that the target effective voltage of the welding power for the n-th cycle appears on the left-hand side. Details of such equations are omitted.

Next, the following describes a welding device A5 according to a fifth embodiment. The welding device A5 differs from the welding device A1 in the calculation period at which the target effective current (or the target effective voltage) is calculated. In particular, while the control circuit 28 of the welding device A1 calculates the target effective current (or the target effective voltage) for AC cycle of the AC power (welding power), the control circuit 28 of the welding device A5 calculates the target effective current (or the target effective voltage) for each generation period of the current waveform command signal (or the voltage waveform command signal). While the following describes an example in which the target effective current is calculated (set) to control the welding current (AC current), the same applies to the case in which the target effective voltage is calculated (set) to control the welding voltage (AC voltage).

Similarly to the control circuit 28 of the welding device A1, the control circuit 28 of the welding device A5 generates a current waveform command signal based on the set target effective current. The current waveform command signal is generated at a period shorter than one AC cycle of the welding power (e.g., welding current). This is the same as the control circuit 28 of the welding device A1. That is, the control circuit 28 generates the current waveform command signal at a calculation period that is shorter than one AC cycle of the AC welding power (welding current). For example, the duration of one cycle of AC welding power (welding current) is 20 msec (the frequency of the welding power is 50 Hz), while the calculation period of the current waveform command signal is 50 µsec. Note, however, that the durations of the AC cycle of welding power (welding current) and the calculation period of the current waveform command signal are not limited to this example. Based on this relation of the AC power cycle and the calculation period of the current waveform command signal, the control circuit 28 of the welding device A5 calculates (sets) the target effective current at the timing of generating the current waveform command signal. In other words, the control circuit 28 of welding device A5 synchronizes the start of each calculation period of the current waveform command signal with the start of the n-th calculation period of the target effective current, and sets the target effective current for the n-th cycle at each such calculation period. Hence, the welding device A5 calculates (sets) the target effective current at a calculation period shorter than that used in welding device A1. Note that the control circuit 28 of the welding device A5 may calculate the target effective current by any of the calculation methods used in the welding devices A1 to A4. In the present embodiment, the n-th cycle corresponds to the duration of one cycle of the welding power (AC power) that follows the current time, and the (n-1)th cycle corresponds to the duration of one cycle of the welding power (AC power) that precedes the current time.

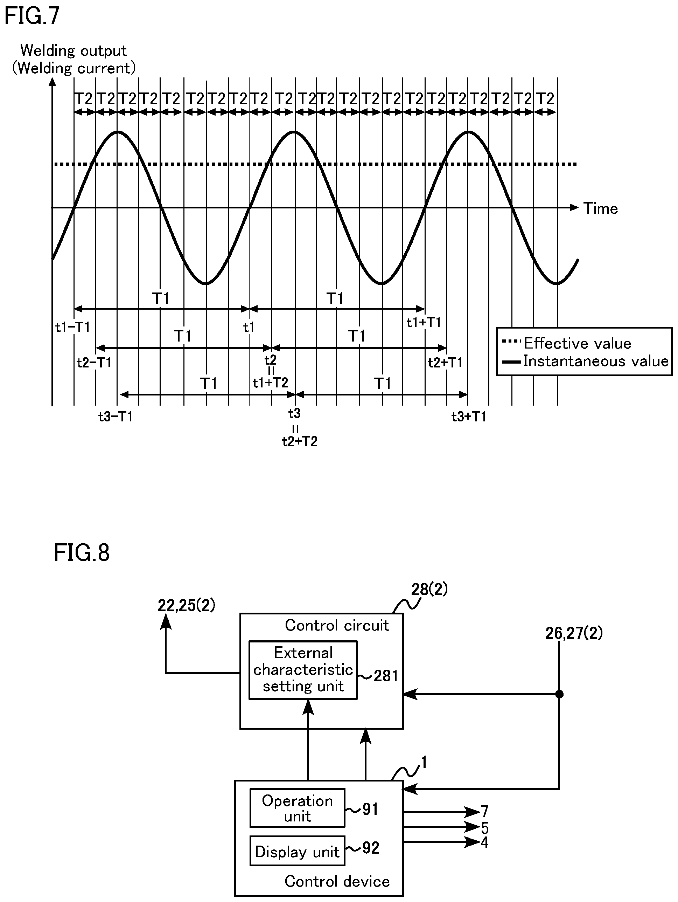

Fig. 7 shows the waveform of welding current for illustrating an example operation of the welding device A5. In Fig. 7, T1 represents one AC cycle of the welding power (AC current), and T2 represents one calculation period of the current waveform command signal. In the illustrated example, T2 is one-eighth of T1, but the ratio between T1 and T2 is not particularly limited. Note in addition, the effective value of the welding current is assumed to remain unchanged throughout the period shown in Fig. 7.

At time t1, the control circuit 28 calculates the target effective current using information from the period of one cycle T1 immediately preceding time t1 and sets the calculated target effective current. Note that the target effective current may be calculated using any of the methods used in the welding devices A1 to A4. Then, based on the target effective current set at time t1, the control circuit 28 generates a current waveform command signal that specifies the current waveform for the period of one cycle T1 immediately subsequent to time t1.

At time t2, which is one calculation period T2 after time t1 (t2 = t1 + T2), the control circuit 28 calculates the target effective current using information from the period of one cycle T1 immediately preceding time t2 and sets the calculated target effective current. Then, based on the target effective current set at time t2, the control circuit 28 generates the current waveform command signal that specifies the current waveform for the period of one cycle T1 immediately subsequent to time t2. The same operation is performed at time t3 (= t2 + T2).

As can be seen from the example operation described above, the control circuit 28 of the welding device A5 updates the target effective current at each calculation period T2 for the current waveform command signal. Then, the current waveform command signal is generated based on the updated target effective current, and the welding current is controlled accordingly.

In the welding device A5, the target effective current is updated at a shorter period than that in the welding devices A1 to A4 (at the calculation period of the current waveform command signal). During welding, the welding voltage varies in response to changes in the arc length. The welding device A5 is capable of improving current responsiveness to fluctuations in the welding voltage.

The first to fifth embodiments described above relates to examples in which the control circuit 28 controls the welding power based on the predetermined external characteristic. In different examples, the external characteristic may be adjustable. Fig. 8 shows a welding device according to such a variation. Fig. 8 shows a control circuit 28 and a control device 1, and the remaining configuration is similar to Figs. 1 and 2.

The welding device shown in Fig. 8 includes am operation unit 91 and a display unit 92. In the illustrated example, the operation unit 91 and the display unit 92 are included in the control device 1. In a different example, the operation unit 91 and the display unit 92 may be included in the power supply device 2. In such a case, the operation unit 91 and the display unit 92 are coupled to the control circuit 28.

The operation unit 91 accepts operations from the user. The operation unit 91 receives user input specifying the values of the parameters of the external characteristic. The parameters of the external characteristic include the type of the external characteristic (constant-voltage characteristic, constant-current characteristic, or drooping characteristic) and the slope of the external characteristic line. The parameters of the external characteristic are not limited to these two. In one example, the operation unit 91 accepts user input specifying the slope of the external characteristic line within a range of -0.5 V/100 A to 40 V/100 A. However, the acceptable range of the slope of the external characteristic line is not limited to this. For example, the slope of the external characteristic line may be specified as 0 (e.g., 0 V/100 A). Then, depending on the combination of the slope and the type of external characteristic, a completely constant-current characteristic (in which the current remains constant even if the voltage changes) or a completely constant-voltage characteristic (in which the voltage remains constant even if the current changes) can be specified. The control device 1 outputs the parameter values of the external characteristic specified via the operation unit 91 to the power supply device 2 (control circuit 28).

The display unit 92 may include a liquid crystal display, an organic electro-luminescence display (OEL or organic EL) display, or a segment display. The display unit 92 displays various information of the welding device. For example, the display unit 92 displays the parameter values of the external characteristic when they are specified via the operation unit 91.

The control circuit 28 includes an external characteristic setting unit 281. The external characteristic setting unit 281 switches between a standard value mode and a free setting mode. The standard value mode is for setting, as the external characteristic, standard values corresponding to information related to welding. Examples of information related to welding include the welding polarity (AC, DC negative, or DC positive), the control method (the constant-voltage control mode (constant feed speed control mode), the constant-current control mode (variable feed speed control mode)), and the set values of the welding current and welding voltage. The information related to welding is not limited to these. The standard value is a recommended value for the related welding information. The free setting mode is for setting, as the external characteristic, values specified (input) via the operation unit 91. The external characteristic setting unit 281 switches to the free setting mode when a parameter value of the external characteristic is specified or input through user operation of the operation unit 91. In contrast, the external characteristic setting unit 281 switches to the standard value mode when no parameter value of the external characteristic is specified or input via the operation unit 91.

In the standard value mode, the control circuit 28 performs the external-characteristic effective-value control described in the first to fifth embodiments, using a recommended standard value as the external characteristic. In the free setting mode, in contrast, the control circuit 28 performs the external-characteristic effective-value control described in the first to fifth embodiments, using a value specified via the operation unit 91 as the external characteristic.

The welding device according to the variation shown in Fig. 8 allows the user to easily adjust the parameters of the external characteristic (the type of the external characteristic and the slope of the external characteristic line), according to the various welding conditions, such as the welding target, welding material, the feed control method, and the protrusion length of the welding wire. For example, the standard value mode is suitable for less experienced welding operators, as it allows them to use a recommended external characteristic and helps maintain welding quality. In contrast, the free setting mode is suitable for experienced welding operators, as it allows them to adjust the parameters of the external characteristic according to welding conditions, such as those described above, and thus to improve welding quality.

The configuration allowing the adjustment of the external characteristic (or its parameters) is not specific to the welding device for AC welding. For example, the configuration is applicable also to a welding device for direct pulse welding as well as to a welding device for direct current welding.

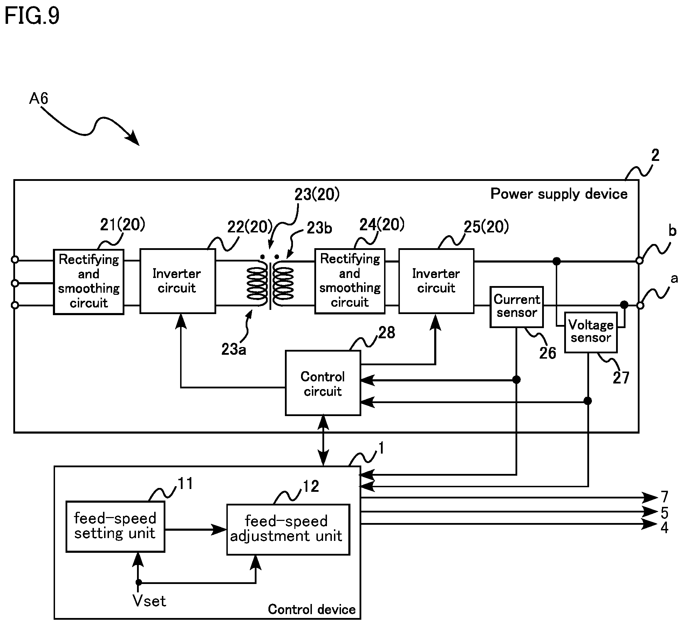

Next, the following describes a welding device A6 according to a sixth embodiment. The welding device A6 differs from the welding device A1 in that the control device 1 performs feedback control of the output voltage (effective value) of the power supply device 2 by varying the welding-wire feed speed through variable wire-feed-speed control. For example, the power supply device 2 controls the arc length using external-characteristic effective-value control based on the constant-voltage characteristic. When a thin welding wire with a diameter of 1.6 mm or less is used, the arc length is appropriately controlled based on the constant-voltage characteristic. In submerged arc welding, however, a thick welding wire with a diameter of 2.4 mm, 3.2 mm, 4.0 mm, 4.8 mm, or 6.4 mm is used. Note that the diameters of a welding wire used in the welding devices of the present disclosure are not limited to these. When a thick welding wire is used, variations in current are insufficient to effectively control the amount of wire melted. The welding device A6 of the present embodiment controls the arc length by the constant-voltage characteristic and also by the variable wire-feed-speed control. To implement the variable wire-feed-speed control, the control device 1 includes a feed-speed setting unit 11 and a feed-speed adjustment unit 12 as shown in Fig. 9.

The feed-speed setting unit 11 is a functional block for setting a reference speed, which is a standard wire-feed speed determined according to the welding conditions. The feed-speed setting unit 11 stores reference speeds for various set voltages Vset and outputs the reference speed corresponding to the selected set voltage Vset to the feed-speed adjustment unit 12. The reference speed is not particularly limited, but is 10 m/min or less.

The feed-speed adjustment unit 12 is a functional block for setting an adjusted speed by correcting the reference speed that is input from the feed-speed setting unit 11. The feed-speed adjustment unit 12 calculates the deviation between the effective voltage value Ve (the effective value Ve of AC voltage over the (n-1)th cycle) calculated by the control circuit 28 and the set voltage Vset. The feed-speed adjustment unit 12 applies, for example, an integral-control operation to the deviation to obtain the corresponding control value. The feed-speed adjustment unit 12 then adds the control value obtained through the integral-control operation to the reference speed received from the feed-speed setting unit 11 to obtain the set feed speed. When the effective voltage value Ve is lower than the set voltage Vset, the feed-speed adjustment unit 12 adds the control value corresponding to the negative deviation. As a result, the wire feeding device 5 is set to a feed speed lower (slower) than the reference speed. Consequently, the feed speed of the welding wire decreases, causing the arc length to be longer and the welding voltage to increase. When the effective voltage value Ve is higher than the set voltage Vset, the feed-speed adjustment unit 12 adds the control value corresponding to the positive deviation. As a result, the wire feeding device 5 is set to a feed speed higher (faster) than the reference speed. Consequently, the feed speed of the welding wire increases, causing the arc length to be shorter and the welding voltage to decrease.

As described above, the control device 1 of the welding device A6 regulates the output voltage of the power supply device 2 to match the set voltage Vset by adjusting the wire-feed speed. The internal configuration of the control device 1 is not limited to the example described above. The control device 1 may be configured differently, provided that it regulates the output voltage (effective value) of the power supply device 2 to match the set voltage Vset by adjusting the wire-feed speed. In the above description, the control circuit 28 calculates the target effective current Itgt(n), and the control device 1 regulates the output voltage (effective value) of the power supply device 2 to match the set voltage Vset through variable wire-feed-speed control. Alternatively, the control circuit 28 may instead set a target effective voltage. In that case, the control device 1 regulates the output current (effective value) of the power supply device 2 to match the set current Iset through variable wire-feed-speed control.

According to the welding device A6, the arc length is controlled by the power supply device 2 using the external-characteristic effective-value control based on the constant-voltage characteristic. The arc length is additionally controlled by the wire feeding device 5 by adjusting the feed speed so that the output voltage (effective voltage value) of the power supply device 2 matches the set voltage Vset. The welding device A6 employs additional arc-length control by varying the wire-feed speed, so that the arc length is appropriately controlled even when a thick welding wire is used and arc-length control based on the constant-voltage characteristic is less effective. The welding device A6 can therefore prevent or reduce a decrease in arc stability when the constant-voltage characteristic is used as the external characteristic.

In the first to sixth embodiments (and variations), the function of either the control circuit 28 or the control device 1 may be incorporated into the other.

The first to sixth embodiments (including variations) are described using examples of AC welding (welding in which AC power is output). However, the welding device of the present disclosure is also applicable to welding in which cyclically varying welding power is output (e.g., DC pulse welding that outputs a pulsed DC waveform). In short, the welding device according to the present disclosure is applicable not only to AC welding but also to welding in which cyclically varying welding power is output (e.g., DC pulse welding) and prevents or reduces a decrease in arc stability.

In the first to sixth embodiments (including variations), the welding device for performing submerged arc welding has been described as an example. However, the welding device of the present disclosure may be applied to any consumable-electrode arc welding process, such as gas metal arc (GMA) welding.

The welding device according to the present disclosure is not limited to the embodiments described above. Various modifications in design may be made freely in the specific structure of each part of the welding device according to the present disclosure.

### REFERENCE NUMERALS

A1 to A6: welding device, 1: control device, 2: power supply device, 20: power supply circuit, 22 and 25: inverter circuit, 28: control circuit, 281: external characteristic setting unit, 91: operation unit

## Claims

1. A welding device for consumable electrode arc welding, comprising:
a power supply circuit including an inverter circuit and configured to supply cyclically varying welding power to an arc; and
a control circuit configured to control the power supply circuit,
wherein the control circuit is configured to:
set a target effective current or a target effective voltage for one cycle subsequent to a current time such that an effective current value and an effective voltage value of the welding power lie on a characteristic line that corresponds to a set external characteristic; and
control an instantaneous welding current or an instantaneous welding voltage based on the set target effective current or the set target effective voltage.

2. The welding device according to claim 1, wherein the control circuit is configured to set the target effective current or the target effective voltage for each cycle of the welding power.

3. The welding device according to claim 1, wherein the control circuit is configured to:
calculate, at a calculation period that is shorter than one cycle of the welding power, a waveform of the welding current from the set target effective current or a waveform of the welding voltage from the set target effective voltage; and
set the target effective current or the target effective voltage for each calculation period.

4. The welding device according to claim 2 or 3, wherein the control circuit is configured to:
calculate the target effective current for the one cycle subsequent to the current time, using the effective current value and the effective voltage value over one cycle preceding the current time; and
determine a current waveform for the one cycle subsequent to the current time such that an effective value of the welding current over the one cycle subsequent to the current time matches the target effective current for the one cycle subsequent to the current time.

5. The welding device according to claim 4, wherein the control circuit is configured to use the target effective current for the one cycle preceding the current time as a substitute for the effective current value over the one cycle preceding the current time.

6. The welding device according to claim 4, wherein the control circuit is configured to use the target effective voltage for the one cycle preceding the current time as a substitute for the effective voltage value over the one cycle preceding the current time.

7. The welding device according to claim 4, wherein the control circuit is configured to:
use the target effective current for the one cycle preceding the current time as a substitute for the effective current value over the one cycle preceding the current time; and
use an average value of instantaneous output voltage over the one cycle preceding the current time as a substitute for the effective voltage value over the one cycle preceding the current time.

8. The welding device according to claim 5, wherein when Iset represents a set current, Vset represents a set voltage, R represents a slope of the characteristic line corresponding to the external characteristic and passing through the set current Iset and the set voltage Vset, Δt represents an alternating current cycle, L represents a virtual inductance, Itgt(n-1) represents the target effective current for the one cycle preceding the current time, and Vfb represents an effective value of an output voltage over the one cycle preceding the current time, the control circuit is configured to calculate the target effective current Itgt(n) for the one cycle subsequent to the current time using Equation (1):
[Math. 1] $Itgt \left(n\right) = \left(L⋅Itgt\left(n-1\right)+Δt\left(Vset+R⋅Iset-Vfb\right)\right) / \left(L+RΔt\right)$

9. The welding device according to any one of claims 1 to 3, wherein the power supply circuit is configured to supply alternating current power as the welding power to the arc.

10. The welding device according to any one of claims 1 to 3, further comprising an operation unit configured to allow specification of a parameter of the external characteristic,
wherein the control circuit is configured to switch between a standard value mode in which a standard value corresponding to information related to welding is set as a set value of the external characteristic and a free setting mode in which a value specified via the operation unit is set as a set value of the external characteristic.
